# EUROPEAN PATENT APPLICATION

(11) **EP 4 080 383 A1**
(43) Date of publication of application: **26.10.2022**
(21) Application number: 22177940.8
(22) Date of filing: 08.06.2022
(51) Int. Cl.: G06F 16/9032, G06F 16/332, G06F 3/023

(54) **METHOD AND APPARATUS FOR PRESENTING INFORMATION, ELECTRONIC DEVICE, STORAGE MEDIUM, AND PROGRAM PRODUCT**

(30) Priority: 08.06.2021 CN 202110639750
(71) Applicant: Apollo Intelligent Connectivity (Beijing) Technology Co., Ltd., Beijing 100176 (CN)
(72) Inventor: YAO, Qianpeng, Beijing, 100176 (CN)
(74) Representative: Stöckeler, Ferdinand

(57) **Abstract**

A method and an apparatus for presenting an information, an electronic device, a storage medium, and a program product are provided, which relate to a field of data processing technology, and in particular to a field of intelligent search. The method includes: searching in a client to obtain a prompt information matched with a search content indicated by a first search request, in response to the first search request; presenting the prompt information in response to determining that the prompt information is obtained by searching in the client; and transmitting to a server a second search request for searching for the prompt information matched with the search content, in response to determining that the prompt information is not obtained by searching in the client.

## Description

### TECHNICAL FIELD

The present disclosure relates to a field of data processing technology, in particular to a field of intelligent search, and specifically to a method and an apparatus for presenting an information, an electronic device, a storage medium, and a program product.

### BACKGROUND

With the rapid development of information technology and network technology, information expansion and information redundancy have brought confusion for information selection to people's social activities and entertainment activities. Finding necessary information from the vast amount of resources has a great challenge. The personalized information service of the Internet can provide different personalized information service strategies for different users, and perform an automatic information recommendation based on different characteristics and requirements of users. However, in the recommendation process, the satisfaction level that the recommendation results meet the personalized requires of users needs to be improved.

### SUMMARY

The present disclosure provides a method and an apparatus for presenting an information, an electronic device, a storage medium, and a program product.

According to an aspect of the present disclosure, a method for presenting an information is provided, including: searching in a client to obtain a prompt information matched with a search content indicated by a first search request, in response to the first search request; presenting the prompt information in response to determining that the prompt information is obtained by searching in the client; and transmitting to a server a second search request for searching for the prompt information matched with the search content, in response to determining that the prompt information is not obtained by searching in the client.

According to an aspect of the present disclosure, an apparatus for presenting an information is provided, including: a first searching module configured to search in a client to obtain a prompt information matched with a search content indicated by a first search request, in response to the first search request; a presenting module configured to present the prompt information in response to determining that the prompt information is obtained by searching in the client; and a request transmitting module configured to transmit to a server a second search request for searching for the prompt information matched with the search content, in response to determining that the prompt information is not obtained by searching in the client.

According to an aspect of the present disclosure, an electronic device is provided, including: at least one processor; and a memory communicatively connected with the at least one processor; wherein the memory stores instructions executable by the at least one processor, and the instructions, when executed by the at least one processor, cause the at least one processor to implement the method described above.

According to an aspect of the present disclosure, a non-transitory computer-readable storage medium having computer instructions stored thereon is provided, wherein the computer instructions are configured to cause a computer to implement the method described above.

According to an aspect of the present disclosure, a computer program product containing a computer program is provided, wherein the computer program, when executed by a processor, causes the processor to implement the method described above.

It should be understood that the content described in this section is not intended to identify key or important features of the embodiments of the present disclosure, nor is it intended to limit the scope of the present disclosure. Other features of the present disclosure will be easily understood through the following description.

### BRIEF DESCRIPTION OF THE DRAWINGS

The accompanying drawings are used to better understand the solutions, and do not constitute a limitation to the present disclosure, in which:
FIG. 1 schematically shows an exemplary system architecture to which a method and an apparatus for presenting an information can be applied according to the embodiments of the present disclosure;
FIG. 2 schematically shows a flowchart of a method for presenting an information according to the embodiments of the present disclosure;
FIG. 3 schematically shows a schematic diagram of presenting a prompt information according to the embodiments of the present disclosure;
FIG. 4 schematically shows a schematic diagram of presenting a prompt information according to the embodiments of the present disclosure;
FIG. 5 schematically shows a flowchart of a method for presenting an information according to the embodiments of the present disclosure;
FIG. 6 schematically shows a block diagram of an apparatus for presenting an information according to the embodiments of the present disclosure; and
FIG. 7 schematically shows a block diagram of an electronic device for implementing a method for presenting an information according to the embodiments of the present disclosure.

### DETAILED DESCRIPTION OF EMBODIMENTS

Exemplary embodiments of the present disclosure will be described below with reference to the accompanying drawings, which include various details of the embodiments of the present disclosure to facilitate understanding and should be considered as merely exemplary. Therefore, those of ordinary skilled in the art should realize that various changes and modifications may be made to the embodiments described herein without departing from the scope and spirit of the present disclosure. Likewise, for clarity and conciseness, descriptions of well-known functions and structures are omitted in the following description.

With the development of Internet technology, a large amount of data resources are flooding explosively, which makes it difficult for a user to accurately and quickly search for a target content he/she is interested in. With the development of search engine technology, this problem has been largely solved. After the user input a keyword (which may be a content that does not fully express semantics) in an input box, a system or an application program may provide a prompt information, for example, under the input box, and the user may select a target search content from the prompt information, so as to achieve the effect of fast input and refined input.

However, in a process of a large number of users using and searching at the same time, the server will receive too many search requests, resulting in an excessive load, which in turn reduces the processing speed, takes a long time, and reduces user experience.

The present disclosure provides a method and an apparatus for presenting an information, an electronic device, a storage medium, and a program product.

According to the embodiments of the present disclosure, a method for presenting an information includes: searching in a client to obtain a prompt information matched with a search content indicated by a first search request, in response to the first search request; presenting the prompt information in response to determining that the prompt information is obtained by searching in the client; and transmitting to a server a second search request for searching for the prompt information matched with the search content, in response to determining that the prompt information is not obtained by searching in the client.

According to the embodiments of the present disclosure, a combination of the client and the server is used to provide the prompt information, which comprehensively achieves the improvement of the processing speed while satisfying the processing capability and improves the user experience.

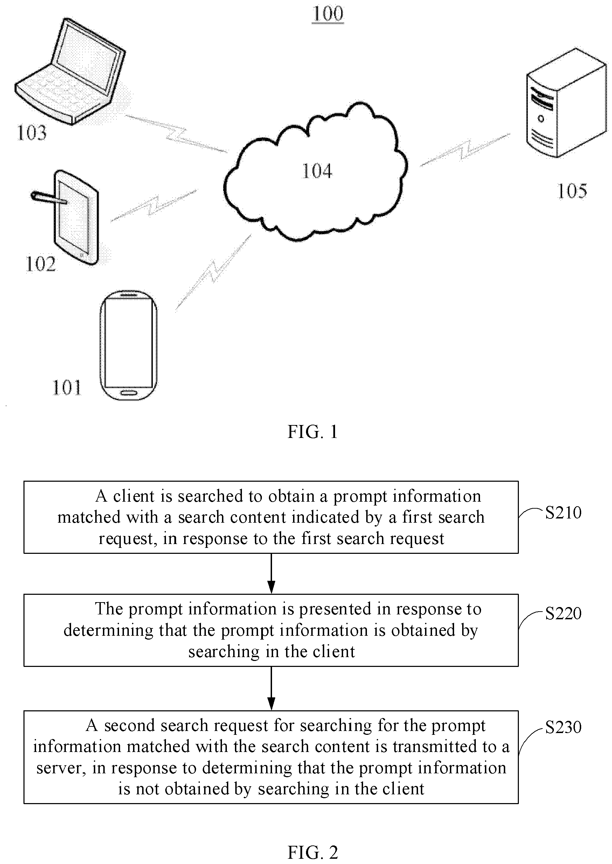

FIG. 1 schematically shows an exemplary system architecture to which a method and an apparatus for presenting an information can be applied according to the embodiments of the present disclosure.

It should be noted that FIG. 1 shows an example of a system architecture to which the embodiments of the present disclosure can be applied, so as to help those skilled in the art to understand the technical content of the present disclosure, but it does not mean that the embodiments of the present disclosure cannot be used for other devices, systems, environments or scenes. For example, in another embodiment, an exemplary system architecture to which a method and an apparatus for presenting an information may include a terminal device, and the terminal device may implement the method and the apparatus for presenting an information provided by the embodiments of the present disclosure without interacting with a server.

As shown in FIG. 1, the system architecture 100 according to the embodiments may include terminal devices 101, 102 and 103, a network 104, and a server 105. The network 104 is a medium used to provide a communication link between the terminal devices 101, 102, 103 and the server 105. The network 104 may have various connection types, for example, wired and/or wireless communication links and the like.

The terminal devices 101, 102 and 103 used by a user may interact with the server 105 through the network 104 so as to receive or transmit information and the like. Various communication client applications may be installed on the terminal devices 101, 102 and 103, such as knowledge reading applications, web browser applications, search applications, instant messaging tools, email clients and/or social platform software, etc. (only example).

The terminal devices 101, 102 and 103 may be various electronic devices, including but not limited to smart phones, tablet computers, laptop computers, desktop computers, and the like, which have a display screen and support web browsing.

The server 105 may be a server that provides various services, such as a background management server (only example) that provides support for a content browsed by the user using the terminal devices 101, 102 and 103. The background management server may analyze and process a data such as a received user request, and feedback a processing result (such as web pages, information, or data acquired or generated according to the user request) to the terminal devices.

It should be noted that the server in the embodiments of the present disclosure may be a cloud server, also referred to as a cloud computing server or a cloud host, which is a host product in a cloud computing service system to solve shortcomings of difficult management and weak business scalability in existing physical host and VPS (Virtual Private Server) service. The server may also be a server of a distributed system, or a server combined with a block-chain.

It should be noted that, the method for presenting an information provided by the embodiments of the present disclosure may generally be executed by the terminal device 101, 102 or 103. Accordingly, the apparatus for presenting an information provided by the embodiments of the present disclosure may also be provided in the terminal device 101, 102 or 103.

For example, when a user reads an e-book online, the terminal devices 101, 102 and 103 may acquire a search content entered by the user in an input box, and then transmit the acquired search content to the server 105. The server 105 is used to analyze the search content and determine a prompt information matched with the search content. Then, the prompt information is recommended to the user. Alternatively, a server or a server cluster capable of communicating with the terminal devices 101, 102, 103 and/or the server 105 analyzes a target content, and the prompt information is recommended to the user.

It should be understood that the numbers of terminal devices, networks and servers shown in FIG. 1 are merely illustrative. There may be any number of terminal devices, networks and servers according to implementation requirements.

It should be noted that, in the technical solution of the present disclosure, the collection, storage, use, processing, transmission, provision, disclosure and application of the user's personal information involved are all in compliance with the provisions of relevant laws and regulations, and necessary confidentiality measures have been taken, and it does not violate public order and good morals. In the technical solution of the present disclosure, before obtaining or collecting the user's personal information, the user's authorization or consent is obtained.

FIG. 2 schematically shows a flowchart of a method for presenting an information according to the embodiments of the present disclosure_{∘}

As shown in FIG. 2, the method includes operations S210 to S230.

In operation S210, a client is searched to obtain a prompt information matched with a search content indicated by a first search request, in response to the first search request.

In operation S220, the prompt information is presented in response to determining that the prompt information is obtained by searching in the client.

In operation S230, a second search request for searching for the prompt information matched with the search content is transmitted to a server, in response to determining that the prompt information is not obtained by searching in the client.

According to the embodiments of the present disclosure, a type of the first search request is not limited. For example, the first search request may be a request transmitted by an application program in use by a user in response to an instruction of the user, or a request triggered by a change of a target object in the application program.

According to the embodiments of the present disclosure, a type of the search content indicated by the first search request is not limited. For example, the search content may be a content entered by a user in a web browser, or a content entered in a communication application program.

According to the embodiments of the present disclosure, a form of the search content is not limited. For example, the search content may be in English, Pinyin, Chinese characters or other languages. It should be noted that the search content may be sentences, words or characters that are not fully expressed. It is difficult for an application program or a system to obtain an operation instruction with a determined semantics according to the search content.

According to the embodiments of the present disclosure, a type of the prompt information matched with the search content is not limited. For example, the prompt information may be an extended information associated with the search content, or may be a specific explanation content for the search content, or may be a translated text obtained after the search content is translated, etc., which will not be repeated here, as long as it is an information matched with the search content and has a function of prompting the user. The prompt information matched with the search content may be selected by the user to express a target semantics or a target content.

According to the embodiments of the present disclosure, selecting the prompt information may cause the user to quickly complete the input of a target search content, which may improve the input and selection efficiency for the user and improve user experience.

According to the embodiments of the present disclosure, the prompt information obtained by searching may be presented to the user, in response to determining that the prompt information is obtained by searching in the client, and a type of the presenting manner is not limited. For example, the presenting manner may include presenting in a form of a recommendation list, or presenting by scrolling in a present area, which will not be repeated here, as long as the prompt information may be presented to the user so that a next operation can be quickly performed by the user according to the prompt information.

According to the embodiments of the present disclosure, the second search request is transmitted to the server, in response to determining that the prompt information is not obtained by searching in the client. In the embodiments of the present disclosure, a type of the second search request is not limited. For example, the second search request may be a request transmitted directly by the client to the server. However, the type of the second search request is not limited to this, other manners of transmitting requests known in the art may also be included, as long as requesting search for the prompt information matched with the search content may be implemented.

According to the embodiments of the present disclosure, the client is locally searched to obtain the prompt information matched with the search content indicated by the first search request, the prompt information is presented in response to determining that the prompt information is obtained by searching in the client, which may improve the processing speed. The second search request is transmitted to the server, in response to determining that the prompt information is not obtained by searching in the client, which may improve the processing capability. A combination of the client and the server is used to provide the prompt information, which comprehensively achieves the improvement of the processing speed while satisfying the processing capability and improves the user experience.

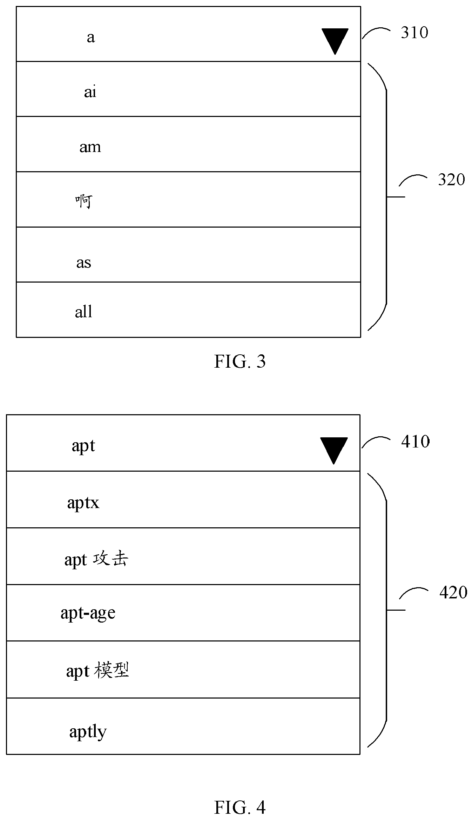

The method shown in FIG. 2 will be further described below with reference to FIGS. 3 to 5 in conjunction with specific embodiments.

FIG. 3 schematically shows a schematic diagram of presenting a prompt information according to the embodiments of the present disclosure.

As shown in FIG. 3, a search content may be input, by a user, in an input box 310 of an application program. For example, when inputting "a", a prompt information list 320 is formed below the input box 310. The prompt information list 320 may present the prompt information in a certain order, such as "ai", "am", " 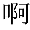 ", "as", and "all".

According to the embodiments of the present disclosure, in response to the user inputting the search content in the input box, the prompt information may be presented to the user for the user to select according to the search content input by the user, which greatly improves the searching speed and inputting speed for the user and reduces the difficulty for the user to self-organize search content.

According to the embodiments of the present disclosure, the first search request may be acquired, in response to determining that a content in the input box has changed.

According to the embodiments of the present disclosure, the change of the content in the input box is not specifically limited. For example, the change may be a change such as addition or deletion for the content in the input box, as long as it is an operation that may change the content in the input box.

According to the embodiments of the present disclosure, the client acquires the first search request in response to determining that the content in the input box has changed.

According to the embodiments of the present disclosure, the search content may be contained in the first search request. In an exemplary embodiment, the search content may be a content presented in the input box.

According to the embodiments of the present disclosure, the client may be searched, based on the search content, to obtain the prompt information matched with the search content, in response to the first search request.

According to the embodiments of the present disclosure, when a content, such as a keyword, is input in the input box of the browser by the user, responding by tracking the change of a text in the input box in real time. That is, when there is content input in the input box or the content in the input box changes, the acquiring of the first search request will be triggered. For example, "a" is input in the input box by the user at a previous time instant, and in response to a first search request indicating "a", the client is searched to obtain a prompt information matched with "a". At a later time instant, "p" is further input in the input box by the user, and in response to a first search request indicating "ap", the client is searched to obtain a prompt information matched with "ap".

According to the embodiments of the present disclosure, the client acquires the first search request in response to determining that the content in the input box has changed. Responding in real time according to the change of the content in the input box may achieve the effect of real-time tracking and processing and improve the user experience.

According to the embodiments of the present disclosure, a data cache of the client is searched to obtain the prompt information by means of prefix indexing, in response to the first search request.

According to the embodiments of the present disclosure, a type of the data cache of the client is not limited. For example, the data cache may be a Redis cache, or other databases with caching capabilities.

According to the embodiments of the present disclosure, a time period of caching is not limited. For example, the time period may be a day or a month. In order to improve the processing power and reflect the real-time performance, the time period of caching may be preset to one day.

According to the embodiments of the present disclosure, the data cache of the client is searched to obtain the prompt information, and in response to determining that the prompt information is not obtained by searching in the client, the second search request is transmitted to the server, which may prevent the client from transmitting requests to the server frequently, avoid causing a large number of requests to be transmitted to the system at the same time, reduce the load and improve the processing efficiency.

FIG. 4 schematically shows a schematic diagram of presenting a prompt information according to the embodiments of the present disclosure.

As shown in FIG. 4, "apt" is input in an input box 410 by a user, and in response to a first search request indicating "apt", a cache of a client is searched to obtain a prompt information matched with "apt" by means of prefix indexing, such as "aptx", "apt 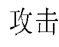 ", "apt-get", "apt 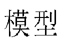 ", "aptly" and other prompt information in a prompt information list 420.

According to the embodiments of the present disclosure, the means of prefix indexing is simple, effective and accurate.

According to the embodiments of the present disclosure, the prompt information may be stored in the cache for query and call. However, it is not limited to this, the prompt information may be stored in a preset database, or a storage space that can achieve a function of storing and reading.

According to the embodiments of the present disclosure, a presenting manner of the prompt information is not limited. For example, the prompt information may be presented in a form of a drop-down list below the input box, but it is not limited to this, as long as the prompt information can be presented to facilitate prompt and click to select from it.

According to the embodiments of the present disclosure, a presenting number of the prompt information is not limited. For example, all prompt information matched with the search content may be presented, or a part of all prompt information matched with the search content may be presented.

For example, a plurality of candidate prompt information matched with the search content are acquired in the client; the plurality of candidate prompt information are sorted according to weights of the plurality of candidate prompt information to obtain a sorting result; and based on the sorting result, a preset number of candidate prompt information are selected from the plurality of candidate prompt information as the prompt information, and the prompt information is presented.

According to the embodiments of the present disclosure, the preset number is not limited and may be set according to actual conditions. For example, the preset number may be half, a quarter or a fixed number of the total number of candidate prompt information.

According to an exemplary embodiment of the present disclosure, a search content may be "ap", and a plurality of candidate prompt information for the search content may be {app, apple, apt, aptx, apply, ape, app store}. The plurality of candidate prompt information are sorted according to their weights, and a sorting result "app, apple, apt, apply, ape, aptx, app store" is obtained. Based on the sorting result, five candidate prompt information "app", "apple", "apt", "apply", and "ape" are selected, in an order from front to back, from the above-mentioned seven candidate prompt information as the prompt information, and presented.

According to the embodiments of the present disclosure, a method of calculating the weight of the candidate prompt information is not limited. For example, the weight of the candidate prompt information may be a weight used to characterize a number of times of selecting the candidate prompt information in history, or may be a weight used to characterize an importance of the candidate prompt information, or other weight used to characterize a difference between the plurality of candidate prompt information.

According to the embodiments of the present disclosure, the plurality of candidate prompt information matched with the search content are acquired by means of prefix indexing, so that a target information can be quickly acquired from a large amount of data. The plurality of candidate prompt information are sorted according to their weights, and the sorting result is obtained, which may be closer to the actual desire, so that an accurate prompt information is obtained. The preset number of candidate prompt information are selected from the plurality of candidate prompt information as the prompt information, which may facilitate presenting, cause a redundant information to present concisely and accurately, facilitate users to quickly select the target prompt information, and improve the user experience.

According to the embodiments of the present disclosure, in a case that the plurality of candidate prompt information are sorted according to their weights, there may be a case that the weights of plurality of candidate prompt information are the same. In the embodiments of the present disclosure, at least two of the plurality of candidate prompt information are sorted according to a character order or a stroke order, so as to obtain the sorting result.

For example, it is determined whether the weights of the plurality of candidate prompt information are the same or not; at least two of the plurality of candidate prompt information are sorted according to a character order or a stroke order, in response to determining that the at least two of the plurality of candidate prompt information having the same weight, so as to obtain the sorting result; and the plurality of candidate prompt information are sorted according to the weights of the plurality of candidate prompt information, in response to the plurality of candidate prompt information having different weights from each other, so as to obtain the sorting result.

According to the embodiments of the present disclosure, English words "as" and "all" have the same weight of 78 points, and the candidate prompt information "as" and "all" may not be sorted only according to the weights. In this case, "as" and "all" having the same weight may be sorted according to an order of English characters. For example, "1" precedes "s" in English characters, and thus "all" precedes "as".

According to the embodiments of the present disclosure, in practice, the search content is not limited to being in English, but may also being in Pinyin. For pinyin, the sorting may be performed according to the order of English characters, or according to an order of pinyin characters. For Chinese, the sorting may be performed according to an order of total number of strokes.

According to the embodiments of the present disclosure, a combination of the weight and the character order or the stroke order is used to sort the candidate prompt information, so that the sorting manner is clear and the stability of the system processing is improved.

According to the embodiments of the present disclosure, a method of determining the weight of the candidate prompt information may be based on the number of times of selecting the candidate prompt information in history. For example, if "app store" is selected 100 times, and "apple" is selected 10 times, and a weight of "app store" will be greater than a weight of "apple". When sorting the candidate prompt information, "app store" will precede "apple". In the embodiments of the present disclosure, for the sake of clarity, the weight may also be assigned a score that is the same as the number of times of selecting in history. For example, a score of the weight of "app store" which is selected 100 times in history is 100 points, while a score of the weight of "apple" which is selected 10 times in history is 10 points. In this way, it is more conducive to compare and sort.

According to the embodiments of the present disclosure, the method of determining the weight of the candidate prompt information may also be based on the number of times of selecting the candidate prompt information within a preset time period.

For example, the number of times of selecting the candidate prompt information within the preset time period is determined; and the weight of the candidate prompt information is determined according to the number of times of selecting the candidate prompt information.

According to the embodiments of the present disclosure, the number of times of selecting the candidate prompt information may be filtered (or defined) by time period. For example, a number of times of selecting within a time period is determined as valid number of times of selecting, and a number of times of selecting outside the time period is determined as invalid number of times of selecting. The weight of the candidate prompt information is determined according to the valid number of times of selecting, and the invalid number of times of selecting is filtered out and is not considered for the weight.

According to the embodiments of the present disclosure, the preset time period may be the most recent time period, for example, a period of time before the content in the input box changes, the time period may be one day, one month or more, which will not be repeated here.

According to the embodiments of the present disclosure, if the preset time period is determined as the most recent time period, it is possible to more effectively track, search for popular events, and effectively present news events in real time.

According to other embodiments of the present disclosure, the weight of the candidate prompt information may also be determined in the following manners.

For example, if a single historical selection of the candidate prompt information is used as a first weight, and a single historical selection time instant of the candidate prompt information is used as a second weight, a single weight of the candidate prompt information includes the product of the first weight and the second weight, a total weight of the candidate prompt information is a sum of a plurality of single weights.

According to the embodiments of the present disclosure, the weight is calculated by combining the number of times of selecting in history and the historical selection time instant, and the sorting is performed based on the weight, so that the recommendation result is more accurate, and may better reflect real-time and effectiveness.

According to the embodiments of the present disclosure, the second search request is transmitted to the server by means of asynchronous requesting, in response to determining that the prompt information is not obtained by searching in the client.

According to the embodiments of the present disclosure, a type of the server is not limited. For example, the server may be a cloud server. However, it is not limited to this, and other types of servers may also be used, as long as the server may implement the function of storing, searching and calling candidate prompt information.

According to the embodiments of the present disclosure, a method of transmitting the second search request may include asynchronous requesting, but is not limited thereto, and may also include synchronous requesting. In the embodiments of the present disclosure, the means of asynchronous requesting is adopted, which is more convenient and improves the processing efficiency of the system.

According to the embodiments of the present disclosure, not only the second search request is transmitted by means of asynchronous requesting, but the prompt information may also be obtained from the server interface by means of asynchronous calling

According to the embodiments of the present disclosure, the prompt information may also be rendered on a page in a form of a prompt information list for present, which facilitate user to see the prompt information.

According to the embodiments of the present disclosure, the server may be a cloud server. A Redis database is provided on the cloud server in the embodiments of the present disclosure. The Redis database may be a completely open source high-performance key-value database. The data in the Redis database is stored in memory (and may also be persisted to disk), so the performance is extremely high. The Redis database supports rich data structures, such as a "sorted set", that is, several non-repetitive elements are provided in a set, and each element is assigned a score to form the sorted set.

According to the embodiments of the present disclosure, in response to the server receiving the second search request containing a "search content" transmitted by the client, the sorted set is searched, based on the search content, to acquire a prompt information, and the prompt information is transmitted to the client for presenting.

According to the embodiments of the present disclosure, the data in the client and the server may dynamically adjust the weight of the stored candidate prompt information according to the next operation of user.

For example, in response to a target prompt information being selected by a user from the prompt information, the target prompt information and a time instant at which the target prompt information is selected are recorded by the client, and a weight of the target prompt information is adjusted according to a preset rule; and the target prompt information, the time instant at which the target prompt information is selected, and the weight of the target prompt information are transmitted to the server, so that the server updates a record for the target prompt information.

According to the embodiments of the present disclosure, in response to a target prompt information, such as "as", being selected by the user from the prompt information, the client may acquire the target prompt information. The client will locally record the target prompt information and the time instant at which the target prompt information is selected, and adjust the weight of the target prompt information according to the preset rule. For example, if the number of times of selecting increases by 1, the score of the weight increases by 1.

According to the embodiments of the present disclosure, the client may also transmit relevant parameters to the server asynchronously. The server may add 1 to the score of "as" in the dictionary corresponding to the key "a", and the score of "as" is changed from the original 78 to 79, and the server may record the time instant at which "as" is selected.

According to the embodiments of the present disclosure, the server may track the number of times of using the prompt information and may be dynamically adjusted to update the presenting order of the candidate prompt information in real time. After the parameters of the cloud server are dynamically adjusted, the client updates the cache of local data accordingly.

According to the embodiments of the present disclosure, the client and the server are dynamically adjusted in real time, which not only reflects the timeliness, but also makes the recommendation more accurate.

According to the embodiments of the present disclosure, at the beginning of performing the method for presenting an information, the search content input by the user may be written into a log, and a certain amount of search content frequently used by the user will be accumulated in the log after a certain time period. Then, the functions of initially storing, searching and calling a prompt information may be achieved by processing data.

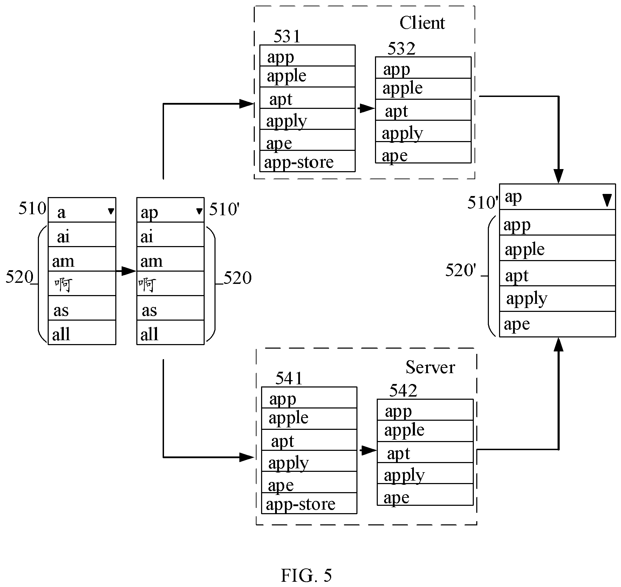

FIG. 5 schematically shows a flowchart of a method for presenting an information according to the embodiments of the present disclosure.

As shown in FIG. 5, for an application program on the client, at a time instant "a", a search content in an input box 510 is "a", and a prompt information list 520 below the input box 510 presents "ai, am, 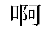 , as, all". At a time instant "b", the search content in the input box 510' is changed to "ap". Based on the change of the search content, a first search request is acquired. In response to the first search request, a data cache of the client is searched to obtain a plurality of candidate prompt information matched with "ap" and sorted by weights of the plurality of candidate prompt information, that is, a candidate prompt information 531. And the candidate prompt information 531 is processed by the client to obtain a preset number of prompt information that have been sorted, that is, a prompt information 532. Based on the prompt information 532, a prompt information list, such as a prompt information list 520', below the input box 510' is updated.

The client may transmit a second request to the server in a case that the prompt information matched with "ap" is not obtained by searching in the data cache of the client in response to the first search request. The Redis database may be searched by the server to obtain a candidate prompt information 541 matched with "ap", and the candidate prompt information 541 may be processed by the server to obtain a prompt information 542. Then, the server transmits the prompt information 542 to the client, so that the client may update a prompt information list, such as the prompt information list 520', below the input box 510' based on the received prompt information 542.

According to the method for presenting an information provided by the embodiments of the present disclosure, a combination of the client and the server is used to provide the prompt information, which comprehensively achieves the improvement of the processing speed while satisfying the processing capability and improves the user experience.

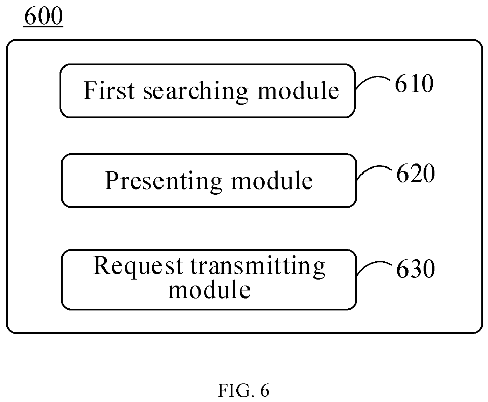

FIG. 6 schematically shows a block diagram of an apparatus for presenting an information according to the embodiments of the present disclosure.

As shown in FIG. 6, the apparatus 600 for presenting an information includes a first searching module 610, a presenting module 620, and a request transmitting module 630.

The first searching module 610 is used to search in a client to obtain a prompt information matched with a search content indicated by a first search request, in response to the first search request.

The presenting module 620 is used to present the prompt information in response to determining that the prompt information is obtained by searching in the client.

The request transmitting module 630 is used to transmit to a server a second search request for searching for the prompt information matched with the search content, in response to determining that the prompt information is not obtained by searching in the client.

According to the embodiments of the present disclosure, the presenting module 620 may include an acquiring sub-module, a sorting sub-module, and a selecting sub-module.

The acquiring sub-module is used to acquire, in the client, a plurality of candidate prompt information matched with the search content; the sorting sub-module is used to sort the plurality of candidate prompt information according to weights of the plurality of candidate prompt information to obtain a sorting result; and the selecting sub-module is used to select, from the plurality of candidate prompt information, a preset number of candidate prompt information as the prompt information, based on the sorting result, and presenting the prompt information.

According to the embodiments of the present disclosure, the apparatus 600 for presenting an information further includes a frequency determining module, and a weight determining module.

For a candidate prompt information, the frequency determining module is used to determine a number of times of selecting the candidate prompt information within a preset time period; and the weight determining module is used to determine a weight of the candidate prompt information according to the number of times of selecting the candidate prompt information.

According to the embodiments of the present disclosure, the sorting sub-module may include a determining unit, a first sorting unit, and a second sorting unit.

The determining unit is used to determine whether the weights of the plurality of candidate prompt information are the same or not; the first sorting unit is used to sort at least two of the plurality of candidate prompt information according to a character order or a stroke order, in response to determining that the at least two of the plurality of candidate prompt information having the same weight, so as to obtain the sorting result; and the second sorting unit is used to sort the plurality of candidate prompt information according to the weights of the plurality of candidate prompt information, in response to the plurality of candidate prompt information having different weights from each other, so as to obtain the sorting result.

According to the embodiments of the present disclosure, the apparatus 600 for presenting an information further includes an adjusting response module and a transmitting weight module.

The adjusting response module is used to, in response to a target prompt information being selected by a user from the prompt information, record, by the client, the target prompt information and a time instant at which the target prompt information is selected, and adjust a weight of the target prompt information according to a preset rule; and the transmitting weight module is used to transmit the target prompt information, the time instant at which the target prompt information is selected, and the weight of the target prompt information to the server, so that the server updates a record for the target prompt information.

According to the embodiments of the present disclosure, the request transmitting module may include a request transmitting unit.

The request transmitting unit is used to transmit to the server the second search request by means of asynchronous requesting.

According to the embodiments of the present disclosure, the apparatus 600 for presenting an information further includes an acquiring module.

The acquiring module is used to acquire the first search request in response to determining that a content in an input box has changed.

According to the embodiments of the present disclosure, the first searching module may include a searching unit.

The searching unit is used to search in a data cache of the client to obtain the prompt information by means of prefix indexing.

According to the embodiments of the present disclosure, the present disclosure further provides an electronic device, a readable storage medium, and a computer program product.

According to the embodiments of the present disclosure, the electronic device include at least one processor and a memory communicatively connected with the at least one processor, wherein the memory stores instructions executable by the at least one processor, and the instructions, when executed by the at least one processor, cause the at least one processor to implement the above-mentioned methods.

According to the embodiments of the present disclosure, the non-transitory computer-readable storage medium has computer instructions stored thereon, wherein the computer instructions are used to cause a computer to implement the above-mentioned methods.

According to the embodiments of the present disclosure, the computer program product contains a computer program, wherein the computer program, when executed by a processor, causes the processor to implement the above-mentioned methods.

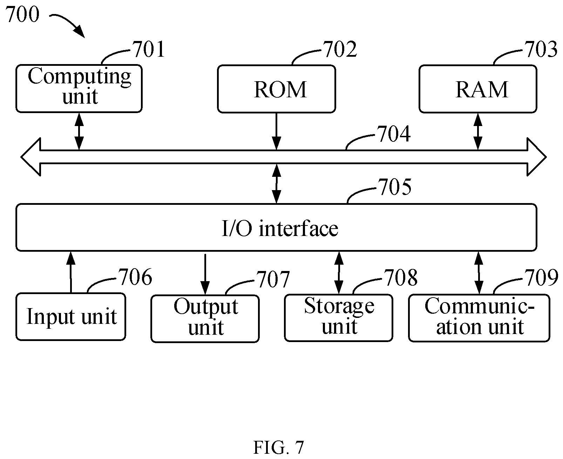

FIG. 7 shows a schematic block diagram of an exemplary electronic device 700 for implementing the embodiments of the present disclosure. The electronic device is intended to represent various forms of digital computers, such as a laptop computer, a desktop computer, a workstation, a personal digital assistant, a server, a blade server, a mainframe computer, and other suitable computers. The electronic device may further represent various forms of mobile devices, such as a personal digital assistant, a cellular phone, a smart phone, a wearable device, and other similar computing devices. The components as illustrated herein, and connections, relationships, and functions thereof are merely examples, and are not intended to limit the implementation of the present disclosure described and/or required herein.

As shown in FIG. 7, the electronic device 700 may include a computing unit 701, which may perform various appropriate actions and processing based on a computer program stored in a read-only memory (ROM) 702 or a computer program loaded from a storage unit 708 into a random access memory (RAM) 703. Various programs and data required for the operation of the electronic device 700 may be stored in the RAM 703. The computing unit 701, the ROM 702 and the RAM 703 are connected to each other through a bus 704. An input/output (I/O) interface 705 is further connected to the bus 704.

Various components in the electronic device 700, including an input unit 706 such as a keyboard, a mouse, etc., an output unit 707 such as various types of displays, speakers, etc., a storage unit 708 such as a magnetic disk, an optical disk, etc., and a communication unit 709 such as a network card, a modem, a wireless communication transceiver, etc., are connected to the I/O interface 705. The communication unit 709 allows the electronic device 700 to exchange information/data with other devices through a computer network such as the Internet and/or various telecommunication networks.

The computing unit 701 may be various general-purpose and/or special-purpose processing components with processing and computing capabilities. Some examples of the computing unit 701 include but are not limited to a central processing unit (CPU), a graphics processing unit (GPU), various dedicated artificial intelligence (AI) computing chips, various computing units running machine learning model algorithms, a digital signal processor (DSP), and any appropriate processor, controller, microcontroller, and so on. The computing unit 701 may perform the various methods and processes described above, such as the method for presenting information. For example, in some embodiments, the method for presenting information may be implemented as a computer software program that is tangibly contained on a machine-readable medium, such as a storage unit 708. In some embodiments, part or all of a computer program may be loaded and/or installed on the electronic device 700 via the ROM 702 and/or the communication unit 709. When the computer program is loaded into the RAM 703 and executed by the computing unit 701, one or more steps of the method of face anti-spoofing described above may be performed. Alternatively, in other embodiments, the computing unit 701 may be configured to perform the method for presenting information in any other appropriate way (for example, by means of firmware).

Various embodiments of the systems and technologies described herein may be implemented in a digital electronic circuit system, an integrated circuit system, a field programmable gate array (FPGA), an application specific integrated circuit (ASIC), an application specific standard product (ASSP), a system on chip (SOC), a complex programmable logic device (CPLD), a computer hardware, firmware, software, and/or combinations thereof. These various embodiments may be implemented by one or more computer programs executable and/or interpretable on a programmable system including at least one programmable processor. The programmable processor may be a dedicated or general-purpose programmable processor, which may receive data and instructions from the storage system, the at least one input device and the at least one output device, and may transmit the data and instructions to the storage system, the at least one input device, and the at least one output device.

Program codes for implementing the method of the present disclosure may be written in any combination of one or more programming languages. These program codes may be provided to a processor or a controller of a general-purpose computer, a special-purpose computer, or other programmable data processing devices, so that when the program codes are executed by the processor or the controller, the functions/operations specified in the flowchart and/or block diagram may be implemented. The program codes may be executed completely on the machine, partly on the machine, partly on the machine and partly on the remote machine as an independent software package, or completely on the remote machine or the server.

In the context of the present disclosure, the machine readable medium may be a tangible medium that may contain or store programs for use by or in combination with an instruction execution system, device or apparatus. The machine readable medium may be a machine-readable signal medium or a machine-readable storage medium. The machine readable medium may include, but not be limited to, electronic, magnetic, optical, electromagnetic, infrared or semiconductor systems, devices or apparatuses, or any suitable combination of the above. More specific examples of the machine readable storage medium may include electrical connections based on one or more wires, portable computer disks, hard disks, random access memory (RAM), read-only memory (ROM), erasable programmable read-only memory (EPROM or flash memory), optical fiber, convenient compact disk read-only memory (CD-ROM), optical storage device, magnetic storage device, or any suitable combination of the above.

In order to provide interaction with users, the systems and techniques described here may be implemented on a computer including a display device (for example, a CRT (cathode ray tube) or LCD (liquid crystal display) monitor) for displaying information to the user), and a keyboard and a pointing device (for example, a mouse or a trackball) through which the user may provide the input to the computer. Other types of devices may also be used to provide interaction with users. For example, a feedback provided to the user may be any form of sensory feedback (for example, visual feedback, auditory feedback, or tactile feedback), and the input from the user may be received in any form (including acoustic input, voice input or tactile input).

The systems and technologies described herein may be implemented in a computing system including back-end components (for example, a data server), or a computing system including middleware components (for example, an application server), or a computing system including front-end components (for example, a user computer having a graphical user interface or web browser through which the user may interact with the implementation of the system and technology described herein), or a computing system including any combination of such back-end components, middleware components or front-end components. The components of the system may be connected to each other by digital data communication (for example, a communication network) in any form or through any medium. Examples of the communication network include a local area network (LAN), a wide area network (WAN), and Internet.

The computer system may include a client and a server. The client and the server are generally far away from each other and usually interact through a communication network. The relationship between the client and the server is generated through computer programs running on the corresponding computers and having a client-server relationship with each other. The server may be a cloud server, or may be a server of a distributed system, or a server combined with a block-chain.

It should be understood that steps of the processes illustrated above may be reordered, added or deleted in various manners. For example, the steps described in the present disclosure may be performed in parallel, sequentially, or in a different order, as long as a desired result of the technical solution of the present disclosure may be achieved. This is not limited in the present disclosure.

The above-mentioned specific embodiments do not constitute a limitation on the scope of protection of the present disclosure. Those skilled in the art should understand that various modifications, combinations, sub-combinations and substitutions may be made according to design requirements and other factors. Any modifications, equivalent replacements and improvements made within the spirit and principles of the present disclosure shall be contained in the scope of protection of the present disclosure.

## Claims

1. A method for presenting an information, comprising:
searching (S210) in a client to obtain a prompt information matched with a search content indicated by a first search request, in response to the first search request;
presenting (S220) the prompt information in response to determining that the prompt information is obtained by searching in the client; and
transmitting (S230) to a server a second search request for searching for the prompt information matched with the search content, in response to determining that the prompt information is not obtained by searching in the client.

2. The method according to claim 1, wherein the presenting the prompt information in response to determining that the prompt information is obtained by searching in the client comprises:
acquiring, in the client, a plurality of candidate prompt information matched with the search content;
sorting the plurality of candidate prompt information according to weights of the plurality of candidate prompt information to obtain a sorting result; and
selecting, from the plurality of candidate prompt information, a preset number of candidate prompt information as the prompt information, based on the sorting result, and presenting the prompt information.

3. The method according to claim 2, further comprising: for a candidate prompt information,
determining a number of times of selecting the candidate prompt information within a preset time period; and
determining a weight of the candidate prompt information according to the number of times of selecting the candidate prompt information.

4. The method according to claim 2, wherein the sorting the plurality of candidate prompt information according to weights of the plurality of candidate prompt information to obtain a sorting result comprises:
determining whether the weights of the plurality of candidate prompt information are the same or not;
sorting at least two of the plurality of candidate prompt information according to a character order or a stroke order, in response to determining that the at least two of the plurality of candidate prompt information having the same weight, so as to obtain the sorting result; and
sorting the plurality of candidate prompt information according to the weights of the plurality of candidate prompt information, in response to the plurality of candidate prompt information having different weights from each other, so as to obtain the sorting result.

5. The method according to claim 2 or 3, further comprising:
in response to a target prompt information being selected by a user from the prompt information, recording, by the client, the target prompt information and a time instant at which the target prompt information is selected, and adjusting a weight of the target prompt information according to a preset rule; and
transmitting the target prompt information, the time instant at which the target prompt information is selected, and the weight of the target prompt information to the server, so that the server updates a record for the target prompt information.

6. The method according to claim 1, wherein the transmitting to a server a second search request in response to determining that the prompt information is not obtained by searching in the client comprises:
transmitting to the server the second search request by means of asynchronous requesting.

7. The method according to claim 1, further comprising:
acquiring the first search request in response to determining that a content in an input box (310, 410, 510) has changed.

8. The method according to claim 1, wherein the searching in a client to obtain a prompt information matched with a search content indicated by a first search request in response to the first search request comprises:
searching in a data cache of the client to obtain the prompt information by means of prefix indexing.

9. An apparatus (600) for presenting an information, comprising:
a first searching module (610) configured to search in a client to obtain a prompt information matched with a search content indicated by a first search request, in response to the first search request;
a presenting module (620) configured to present the prompt information in response to determining that the prompt information is obtained by searching in the client; and
a request transmitting module (630) configured to transmit to a server a second search request for searching for the prompt information matched with the search content, in response to determining that the prompt information is not obtained by searching in the client.

10. The apparatus according to claim 9, wherein the presenting module comprises:
an acquiring sub-module configured to acquire, in the client, a plurality of candidate prompt information matched with the search content;
a sorting sub-module configured to sort the plurality of candidate prompt information according to weights of the plurality of candidate prompt information to obtain a sorting result; and
a selecting sub-module configured to select, from the plurality of candidate prompt information, a preset number of candidate prompt information as the prompt information, based on the sorting result, and present the prompt information.

11. The apparatus (600) according to claim 10, further comprising: for a candidate prompt information,
a frequency determining module configured to determine a number of times of selecting the candidate prompt information within a preset time period; and
a weight determining module configured to determine a weight of the candidate prompt information according to the number of times of selecting the candidate prompt information.

12. The apparatus (600) according to claim 10, wherein the sorting sub-module comprises:
a determining unit configured to determine whether the weights of the plurality of candidate prompt information are the same or not;
a first sorting unit configured to sort at least two of the plurality of candidate prompt information according to a character order or a stroke order, in response to determining that the at least two of the plurality of candidate prompt information having the same weight, so as to obtain the sorting result; and
a second sorting unit configured to sort the plurality of candidate prompt information according to the weights of the plurality of candidate prompt information, in response to the plurality of candidate prompt information having different weights from each other, so as to obtain the sorting result.

13. An electronic device (700), comprising:
at least one processor; and
a memory communicatively connected with the at least one processor;
wherein the memory stores instructions executable by the at least one processor, and the instructions, when executed by the at least one processor, cause the at least one processor to implement the method of any one of claims 1 to 8.

14. A non-transitory computer-readable storage medium having computer instructions stored thereon, wherein the computer instructions are configured to cause a computer to implement the method according to any one of claims 1 to 8.

15. A computer program product containing a computer program, wherein the computer program, when executed by a processor, causes the processor to implement the method of any one of claims 1 to 8.
